# EUROPEAN PATENT SPECIFICATION

(11) **EP 3 697 204 B1**
(45) Date of publication and mention of the grant of the patent: **12.06.2024**
(21) Application number: 18812355.8
(22) Date of filing: 18.10.2018
(51) Int. Cl.: A01K 11/00

(54) **ANIMAL MANAGEMENT TAG CONFIGURED TO BE WORN BY AN ANIMAL**
ETIKETT FÜR TIERMANAGEMENT ZUM TRAGEN DURCH EIN TIER
ÉTIQUETTE DE GESTION D'ANIMAL CONÇUE POUR ÊTRE PORTÉE PAR UN ANIMAL

(30) Priority: 18.10.2017 NL 2019758
(43) Date of publication of application: 26.08.2020
(73) Proprietor: Nedap N.V., 7141 DC Groenlo (NL)
(72) Inventor: LAMMERS, Rudie Jan Hendrik, 7141 DC Groenlo (NL); VAN DIJK, Jeroen Martin, 7141 DC Groenlo (NL)
(74) Representative: V.O.
(86) International application number: PCT/NL2018/050685
(87) International publication number: WO 2019/078717

(56) References cited:
- EP-A1- 3 009 965
- WO-A2-2014/188273
- US-A1- 2012 198 932
- US-A1- 2015 181 840

## Description

The invention relates to an animal management tag configured to be worn by animal, such as an ear stud, bolus, leg tag, neck tag and a tail tag. The tag is provided with at least one first sensor for performing a measurement on the animal, a processor connected with the at least one first sensor at least for processing measuring results which have been obtained with the aid of the at least one first sensor, and a transmitting device connected with the processor for transmitting information generated by the processor. A tag of this type is known per se, for example from the document US2012198932 A1.

Such animal management tags are widely used in modern farms today. For the modern farm to function properly, it has actually become wholly dependent on the tags. On a cow farm, most cows wear a tag. This enables the farmer to monitor and manage the livestock. For monitoring these animals, a tag is often placed on a predetermined body part, for example to measure particular movements or physiological aspects of the animal. The tag is consequently partly dependent on the physiology of the animal for the measurements on the animal. Often, therefore, the tag is only suitable for measurement on the animal from this predetermined body part. To obtain a more complete picture of their livestock, current modern farms utilize a plurality of tags each measuring on mutually different body parts in a predetermined manner. Further, it is sometimes less practical for the stock farmer to use different tags, or to provide an animal with a plurality of tags.

In line with these circumstances, there is a need for a tag that is more broadly employable and can be used in different manners.

To this end, the invention provides an animal management tag and a system. The animal management tag according to the invention is accordingly characterized in that the processor is configured to process the measuring results, the tag being implemented such that the manner of processing of the measuring results by the processor is implemented selectably depending on the manner in which the tag, in use, is applied (that is, depending on the application on the basis of which the measuring results have been obtained). An advantage is that the one single tag has many applications, such as application as a leg tag, neck tag, ear tag, tail tag, bolus, etc.

In particular, it holds that the tag is configured such that, in use, the manner of processing is determined by an algorithm which is associated with a predetermined application of the tag and which processes the measuring results which have been obtained with the at least one sensor, wherein the tag is configured to execute this algorithm for processing measuring results which have been obtained with the at least one sensor, wherein the processor is configured to select the algorithm which is used for processing the measuring results from a plurality of mutually different algorithms which are each associated with a predetermined application of the tag, wherein in particular the tag is configured such that:
the selection of the algorithm to be used is (preferably automatically) carried out by the processor on the basis of the measuring results obtained with the at least one first sensor;
the selection of the algorithm to be used can be inputted at an input element of the tag; and/or
the selection of the algorithm to be used is (preferably automatically) determined by the processor on the basis of measuring results obtained with at least one second sensor of the tag.

The choice of the algorithm depends on the manner in which the tag, in use, is applied. A processor is less susceptible of improper use when it can choose an algorithm automatically on the basis of the application of the tag in use. In fact, it may happen that a stock farmer attaches a tag to an animal improperly, for example when a tag suitable for measurement on a leg is accidentally attached to the neck. When in that case the at least first sensor is, for example, a movement sensor, a same movement of the animal will lead to deviant measuring results. Even so, the deviant measuring results often still contain information about the same movement of the animal that could be determined with another algorithm. The proper processing of measuring results can therefore prevent improper use of the tag leading to a complete loss of useful information. A processor could then choose such other algorithm for processing of the currently deviant measuring results. Also, it is then possible for a farmer to know that he can use the tag well in different applications such as leg tag and neck tag. The processor then first chooses automatically on the basis of measuring results in which application the tag is used and after that proceeds to use the measuring results accordingly. In that case, then, what is involved is not an error of a farmer, but a farmer who knows that the tag is suitable to be used for different applications such as leg tag, neck tag and tail tag.

Optionally, the tag is configured to process the measuring results with the processor depending on a selection of an application from a group of applications, the group comprising a plurality of mutually different applications. An advantage is that in this way there is no plurality of tags required for a plurality of different applications. In this way, a stock farmer needs to work with a single tag only, which is user-friendly.

Optionally, the group of applications comprises at least two different applications. Each of the at least two different applications is one of an application as ear stud, leg tag, neck tag, tail tag and bolus. In other words, the group comprises at least two different applications of an ear stud, leg tag, neck tag, tail tag and bolus. An advantage is then, for example, that the tag can be exchangeably used for standard applications. A processor could be configured, for example, to recognize by the measuring results which part of the animal the tag is attached to. This can be done, for example, due to the processor being configured such that, in use, it recognizes body part-characteristic measuring results, such as, for example, movements that are characteristic of a particular body part. Thereupon, the processor can then select an algorithm that matches the processing of measuring results from that body part. An advantage is that the tag automatically conforms to the manner of use and hence does not need to be reset for a different use. In this way, the tag is simpler in use.

Optionally, the group comprises at least three different applications, the different applications being, for example, an ear stud, leg tag, neck tag, tail tag and bolus. The tag could be configured, for example, to be receivable in a biocompatible carrier for ingestion. The tag could also be implemented with a biocompatible own housing for ingestion.

Optionally, the group comprises at least four or five different applications, the different applications being, for example, an ear stud, leg tag, neck tag, tail tag and bolus.

In particular, it holds that the tag is configured to process the measuring results with the processor by selecting an algorithm from a group of algorithms whereupon the selected algorithm is executed by the processor for processing the measuring results, the group of algorithms comprising a plurality of different algorithms. It holds here, for example, that the group of algorithms comprises at least two different algorithms, each of the at least two different algorithms being configured to be used (executed) by the processor in an application of the tag as ear stud, leg tag, neck tag, tail tag or bolus. More preferably, it holds that the group of algorithms comprises at least three different algorithms, each of the at least three different algorithms being configured to be used (executed) by the processor in an application of the tag as ear stud, leg tag, neck tag, tail tag or bolus. In particular, it holds that the group of applications comprises at least four different algorithms, each of the at least four different algorithms being configured to be used (executed) by the processor in an application of the tag as ear stud, leg tag, neck tag, tail tag or bolus. Further, it holds in particular that the group of applications comprises at least four different algorithms, each of the at least four different algorithms being designed to be used (executed) by the processor in an application of the tag as ear stud, leg tag, neck tag, tail tag or bolus.

Optionally, the tag is configured to be mechanically connected with a carrier, such as, at will, to different types of carriers of the tag, for example a band or a housing. This might be done with a snap connection or other known mechanical connections. Preferably, the tag is detachably attachable to the carrier. A carrier housing could then be different from a tag's own housing, should the tag have its own housing. An advantage is that the tag is part of a modular system and that it can simply change applications by being connected with a carrier.

Optionally, the tag is configured to be, at will, mechanically connected with a type of carrier from a group of carriers. The group of carriers comprises a plurality of different carriers. Optionally, the group of carriers comprises at least two different types of carriers. Each of the at least two different types of carriers is, for example, one of an ear carrier, leg band, neck band or collar, tail band and bolus housing.

Optionally, the tag is provided with a second sensor, the tag being configured to measure with the second sensor and, on the basis of the measuring results of the second sensor, to recognize and select an application. An advantage is that the tag can thus select its application without measuring results from a first sensor being necessary. This is particularly advantageous when the first sensor is a movement sensor. In that case, for example, the application can also be selected during a period of motional rest. The tag can then recognize with the second sensor what type of carrier the tag is attached to. In this way, it may also have been determined what the application of the tag is. A carrier for attaching the tag to a leg, for example, is different from a carrier for attaching a tag to a neck. Due to the tag being able to recognize the specific carrier, the tag can then also determine the application of the tag and select an associated algorithm to process the measuring results.

Optionally, the second sensor, possibly together with, at will, a type of carrier from a group of different types of carriers, is configured to detect which type of carrier the tag is connected with. An advantage is that the tag can derive its application from the type of carrier. Possibly, the tag may be implemented with a second sensor-detectable coding, as on a detection part, to cooperate with the second sensor. Thus, when the second sensor is a switch, the detection part can be a surface, while, for example, a protrusion on the surface forms the coding. The protrusion can then, for example, force the switch in a particular position when the tag is being attached to the carrier. As a result, the selected carrier can be detected. The application can then be inferred from the position of the switch. The tag will then be able to determine the application on the basis of the detection of the selected carrier. When the second sensor is a magnetic sensor, the detection part may comprise, for example, a ferromagnetic coding. When the second sensor is an RFID reader, the detection part can be an RFID tag, with a coding comprised in the RFID tag. When the second sensor is an NFC reader, the detection part can be an NFC tag, with a coding comprised in the NFC tag. It will be clear that each coding is associated with an application. When the second sensor is an (active) light sensor, the detection part can be a small lamp, reflector or covering in which for example a coding is incorporated. Thus, a lamp being on can be a coding for a particular application. The same can hold for the color of a lamp, the pattern of switching on and off and the intensity of the light being emitted by the lamp. The reflector can comprise a coding consisting in the extent and manner of reflecting. The covering can comprise, for example, a coding in the manner of covering, such as complete, or incomplete.

Optionally, the second sensor comprises at least a switch, magnetic sensor, RFID reader, NFC reader and/or light sensor. A light sensor might be used when the tag is used as a bolus. The absence of light can then be an indication that the element is within the cow. Optionally, at least a part of a bolus housing could be made of non-transparent design to bar light.

Optionally, the processor is configured to recognize on the basis of measuring results from the at least one sensor for which application the tag is used and, depending on this, to select in what manner the signals of the at least one first sensor are to be processed. An advantage is that the sensor can be made of more compact design.

Optionally, the at least one first sensor concerns a movement and/or direction sensor. Optionally, the at least one first sensor concerns a 3G sensor, also an omnidirectional accelerometer.

Optionally, the tag is further provided with an energy source such as a lithium battery for supplying the electrical components of the tag, such as the processor, the transmitting device and possibly the sensor with electrical energy for the operation of the electrical components.

According to a further aspect of the invention, a system comprises the animal management tag and at least one discussed type of carrier.

Optionally, the tag is configured to be mechanically connected, at will, with the type of carrier from a group of carriers. The group of carriers comprises a plurality of different carriers. The system comprises the group of different types of carriers.

Optionally, the group of carriers comprises at least two different types of carriers. Each of the at least two different types of carriers is one of an ear carrier, leg band, collar, tail band and bolus housing.

Optionally, each carrier of the group of different types of carriers, in the intended use, is attached to a common animal.

Optionally, the tag is provided with a second sensor. The type of carrier chosen from the group of carriers for attachment comprises a coding detectable for the second sensor. The tag is configured to select the application (in particular the algorithm for processing of the measuring results which have resulted from the application in question) on the basis of the detected coding. Detection can take place, for example, during measurement with the second sensor. The coding is optionally implemented on a detection part of the chosen type of carrier.

The invention will be further clarified by the description of a few specific embodiments. For the purpose, use is made of references to the appended figures. The detailed description provides examples of possible application forms of the invention. These application forms should not be regarded as the only possible embodiments falling within the scope of the invention. The scope of the invention is defined in the claims, and the description should be regarded as being illustrative without thereby limiting the invention.
Fig. 1 shows schematically a first embodiment of a tag according to the invention;
Fig. 2 shows a system 1 of the tag and a carrier;
Fig. 3 shows the tag attached to a carrier as a collar;
Fig. 4 shows the tag attached to a carrier as a leg band;
Fig. 5 shows the tag attached to a carrier as an ear carrier; and
Fig. 6 shows the tag separate from a carrier in the stomach of an animal.

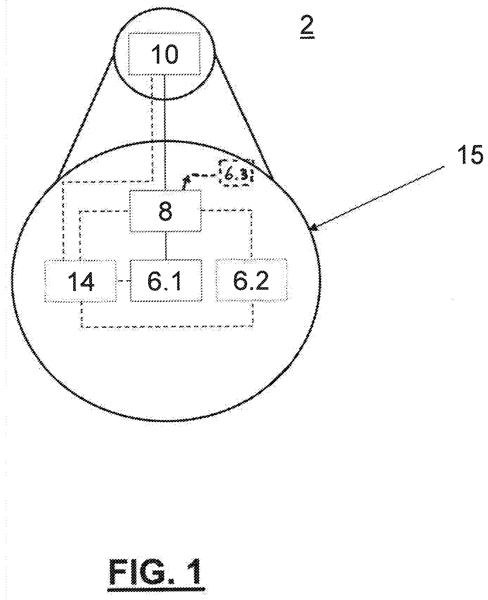

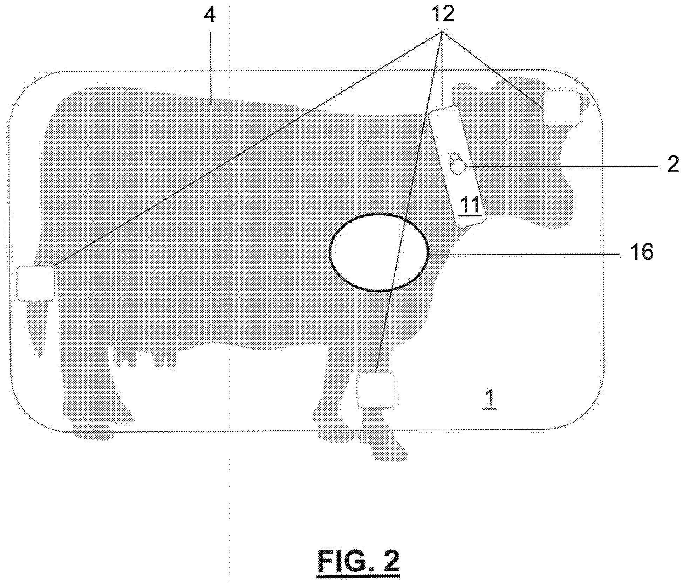

Figure 1 shows schematically an animal management tag 2 configured to be worn by an animal 4 (represented in Figure 2). The tag 2 is provided with at least a first sensor 6.1 for performing a measurement on the animal 4. The tag is further also provided with a processor 8 for processing measuring results which have been obtained with the aid of the first sensor 6.1. The tag 2 is furthermore provided with a transmitting device 10, connected with the processor 8, for transmitting information generated by the processor 8. The transmitting device 10 can be, for example, a UHF transmitting device, a radio transmitting device, or any other transmitting device known per se. The processor 8 is configured to process the measuring results. The manner of processing depends on the manner in which the tag 2, in use, is applied. The manner of processing can be determined by selecting an algorithm which is executed by the processor 8 for the processing of the measuring results. To this end, the tag 2 may be provided with a plurality of algorithms which are stored in a memory of the tag and which can each be used by the processor for the processing of the measuring results. Each algorithm is associated with a specific application of the tag. A first algorithm is for instance suitable to process measuring results when the tag is used as a leg tag (for example, a step counter). A second algorithm is for instance suitable to process measuring results when the tag is used as a neck tag (for example, to measure whether the animal is eating, walking, standing, lying). A third algorithm is for instance suitable to process measuring results when the tag is used as an ear tag (for example, to measure a temperature of the animal). A fourth algorithm is for instance suitable to process measuring results when the tag is used as a tail tag (for example, to measure a movement of the animal).

The different algorithms can each be algorithms known per se to process measuring results of the first sensor 6.1. The first sensor 6.1 can be, for example, a movement sensor, such as an omnidirectional G sensor, also a 3G sensor. The algorithms can then be movement algorithms known per se (for example, a specific algorithm per application of the tag), for, e.g., the recognition of heartbeat, walking, grazing, resting and/or breathing of the animal 4 from a particular body part. The processor 8 may then be configured for (preferably automatically) determining, also dictating, the manner of processing, by, more particularly, choosing an algorithm from a plurality of mutually different algorithms. More particularly, the processor 8 is configured to process the measuring results depending on, at will, an application from a group of applications. The group can comprise a plurality of different applications.

The different applications can be, for example, an application as an ear stud, leg tag, neck tag, tail tag and bolus. Preferably, the group comprises at least two, three or four of these different applications. The processor 8 may be configured such that, in use, it recognizes by measurements made with the aid of the at least first sensor 6.1, body part-characteristic measuring results, such as, for example, movements which are characteristic of measurement on a particular body part. Thus, the processor 8, with the aid of an application-recognition algorithm, can recognize by the measuring results obtained with the aid of the at least one first sensor 6.1 that movements are detected of a type belonging to movements of a leg. In that case, the application-recognition algorithm selects the first algorithm to process the further measuring results of the sensor 6.1. Also, with the aid of the application-recognition algorithm, the processor 8 can recognize by the measuring results obtained with the aid of the at least first sensor 6.1 that movements are detected of a type belonging to movements of a neck. In that case, the application-recognition algorithm selects the second algorithm to process the further measuring results of the sensor 6.1. Also, with the aid of the application-recognition algorithm, the processor 8 can recognize by the measuring results obtained with the aid of the at least first sensor 6.1 that movements are detected of a type belonging to movements of an ear. In that case, the application-recognition algorithm selects the third algorithm to process the further measuring results obtained with a temperature sensor of the tag. Also, with the aid of the application-recognition algorithm, the processor 8 can recognize by the measuring results obtained with the aid of the at least first sensor 6.1 that movements are detected of a type belonging to movements of a tail. In that case, the application-recognition algorithm selects the fourth algorithm to process the further measuring results of the sensor 6.1. In this example, the measuring results of the sensor 6.1 are used to select an algorithm with the aid of the application-recognition algorithm. After that, the measuring results of the sensor 6.1 are further processed with the aid of the selected algorithm. It is also possible, however, that the measuring results of another sensor (such as a 3G acceleration sensor) of the tag are used to select an algorithm with the aid of the application-recognition algorithm. After the selection, the measuring results of the sensor 6.1 are further processed with the aid of the selected algorithm.

In this example, the processor uses the application-recognition algorithm for a selection of an algorithm to be used from the plurality of algorithms. In the above-mentioned examples, the application-recognition algorithm is fed with signals from the sensor 6.1. It may also be, however, that the application-recognition algorithm is fed with the signals of a second sensor 6.2 which is used solely for determining the application. The second sensor 6.2 can then be a 3G sensor as discussed above. Instead of an application-recognition algorithm, the processor may also be provided with a neural network which has been trained to recognize for which of the different applications of the group the tag 2 is used on the basis of measuring results of the at least first sensor 6.1 and/or on the basis of measuring results obtained with an at least one second sensor 6.2 of the tag, to be discussed hereinafter. The neural network then determines which algorithm is selected that, after selection by the processor, is used for processing the measuring results obtained with the first sensor 6.1. Also, the tag may be provided with at least one input means 6.3 which, for example, may be operated by the farmer to input what the application of the tag is. With the input means, an algorithm can then be selected (from the plurality of algorithms) with which measuring results of the first sensor are processed.

It holds more generally, therefore, that the manner of processing is determined by an algorithm which is associated with a predetermined application of the tag and which processes the measuring results which have been obtained with the at least one sensor, while the processor is configured to execute the algorithm for processing measuring results obtained with the at least one sensor, while the processor is configured to (preferably automatically) select the algorithm which is used for the processing of the measuring results, from a plurality of mutually different algorithms which are each associated with a predetermined application of the tag, wherein in particular the tag is configured such that:
the selection of the algorithm to be used is (preferably automatically) carried out by the processor on the basis of the measuring results obtained with the at least one first sensor;
the selection of the algorithm to be used can be inputted at an input element of the tag; and/or
the selection of the algorithm to be used is (preferably automatically) determined by the processor on the basis of the measuring results obtained with at least a second sensor of the tag.

The tag 2 may further be provided with an energy source 14, such as a battery, in particular a lithium-ion battery, for supplying electrical energy to electrical components of the tag 2 for the operation of the electrical components. Alternatively, the energy source could also be provided outside the tag 2, as on a carrier of the tag 2. The electrical components of the tag 2 which are to be supplied with electrical energy can comprise not only the processor 8 and the transmitting device 10, but also the first sensor 6.1 and/or any further sensors. The first sensor 6.1 and any further sensors, however, can also be passive sensors which do not need to be fed from an energy source such as a battery with electrical energy for their operation.

The tag 2 may be configured to be mechanically connected with a type of carrier 11, represented in Figure 2. Such a carrier 11, may be, at will, a type of carrier from a group of different types of carriers 12, such as a collar, leg band, tail band, bolus housing and ear carrier. The tag 2 could be connected with the chosen type of carrier 11 through mechanical connections known per se, as through a snap connection, slide-on connection or complete inclusion in a carrier housing. In the case of an ear carrier, a type of earring connection could be used, while the ear carrier comprises a pin which can extend through the ear of the cow and an eye (not represented but conventional) in the tag's own housing 15.

Accordingly, the tag 2 itself may also be provided with its own housing 15. Optionally, such own housing 15 may be configured such that it can serve as a bolus housing. The optional modularity of the tag is visible in Figure 2. In fact, the chosen type of carrier 11 could be attached to the animal 4 in such a manner that the tag 2 is attached as a module or setup piece to the chosen type of carrier 11. The connection between the tag 2 and the chosen type of carrier 11 may for example be effected between the chosen type of carrier 11 and the tag 2, possibly via its own housing 15. The tag 2 may optionally also be attached to the ear of the animal 4 through a direct connecting piece, such as a pin. Optional components of the tag 2 are represented in dotted lines in Figure 1.

Within the own housing 15 of the tag 2, at least the processor 8 and the transmitting device 10 may be arranged, and optionally also at least part of the first sensor 6.1, any further sensors and/or the energy source 14. It may be that the first sensor 6.1 and/or any further sensors extend partly outside the own housing 15 for their operation or are situated completely outside the own housing 15.

The tag 2 may possibly be provided with the second sensor 6.2. The tag 2 may then be configured to measure with the second sensor 6.2 and, on the basis of the measuring results of the second sensor 6.2, (preferably automatically) select an application of the tag. Hence, selecting an application is here understood to mean, in particular, selecting an algorithm which is used by the processor for processing the measuring results of the at least one sensor. The second sensor 6.2 may then be configured to detect which type of carrier the tag 2 is connected with. The chosen type of carrier 11 from the group of different type carriers 12 can comprise a coding (not represented, but conventional such as mechanical, optical and magnetic codings) which is detectable for the second sensor 6.2. The tag may then be configured to select the application on the basis of the detected coding of the respective carrier. The second sensor 6.2 may for instance comprise a switch which is energized by a mechanical part of the carrier, such that with the switch an application is selected that belongs to the carrier.

The tag 2 and the carrier 11 are for example so configured that the switch, during the attachment of the tag 2 to the chosen type of carrier 11, takes up a predetermined position that is associated with the chosen type of carrier and/or that is associated with the manner in which the measuring results are to be processed by the processor and/or that is associated with the algorithm that is to be used by the processor for processing the measuring results. Possibly, in another embodiment, it would also be possible that - in lieu of the chosen type carrier 11 - a farmer can operate the switch to define the use before attaching the tag 2 to the chosen type of carrier 11.

The tag 2 may also be so configured that with the aid of the second sensor 6.2 it is determined that the tag is not connected with a carrier. From this, the processor can then infer, for example, that the tag 2 is used as a bolus. Alternatively, the second sensor 6.2 could comprise a magnetic sensor for detecting a code which is part of the selected type of carrier. The code can then indicate what type of carrier is involved, so that the tag on the basis of the type of carrier can determine how the measuring results of the tag are to be processed and/or which algorithm is to be selected for the processing of the measuring results. The code, instead of indicating the type of carrier, may also indicate directly how the measuring results are to be processed and/or which algorithm is to be selected for the processing of the measuring results. The chosen type of carrier 11 may then be implemented with a coded magnetic element, such as a magnetic strip, for detection with the second sensor 6.2. Alternatively, the second sensor 6.2. could comprise an optical code reader for detecting the code which is part of the selected type of carrier. The chosen type of carrier 11 may then be implemented with an optical coding for detection with the second sensor 6.2.

Alternatively, the second sensor 6.2 could comprise a radio frequency identification (RFID) reader for detecting the code that is part of the selected type of carrier. The chosen type of carrier 11 may then be implemented with an RFID tag for detection with the second sensor 6.2. The RFID tag can then comprise a coding which indicates which type of carrier is involved and/or in which manner the measuring results are to be processed and/or which algorithm is to be selected.

Alternatively, the second sensor 6.2 could comprise a near-field communication (NFC) reader. The carrier 11 may then be configured with an NFC tag provided with a coding, for detection with the second sensor 6.2. The NFC tag can then contain information about the type of carrier 11, for example the type of carrier and possibly the intended use. Alternatively, the second sensor 6.2 can comprise a light sensor. Possibly, with the light sensor an internal use of the tag 2 can be determined by the absence of light. It is also possible that the second sensor 2 is implemented as an input element with which, for example, a farmer can input an algorithm to be used for processing measuring results of the first sensor. In other words, the farmer can input an application of the tag with the input element 2. This input element can comprise, for example, a number of switches and/or a receiver to receive selection signals wirelessly. These selection signals may be sent, for example, with an app of a tablet or mobile phone, for example via Bluetooth or NFC.

In Figure 2 there is represented a system 1 of the tag 2 and the chosen type of carrier 11. In this example, the chosen type of carrier 11 is a collar. However, such a chosen type of carrier 11 could also, at will, be a different type of carrier from the group 12 of at least two, three or four different types of carriers. The chosen type of carrier 11 is, in the intended use, attached to the animal 4. This is different, however, when the chosen type of carrier 11 is a bolus housing instead of a band, as a bolus housing is worn in a stomach 16 of the animal. Attaching the tag to a type of carrier is hence also understood to include accommodating the tag in a housing of a bolus. It will be clear that the animal 4 is not part of the system 1. The animal 4 merely highlights an intended use. The tag 2 is attached to the chosen type of carrier 11, but can preferably be detached therefrom in order to be attached to another type of carrier of the group 12. A bolus housing is not represented in Figure 2, but can be part of the group 12. If the tag 2 is implemented with its own housing 15 which makes the tag 2 suitable for use as a bolus, the tag 2 can also be introduced into the stomach 16 of the animal 4, separately from any type of carrier from the group 12. In this example, the animal 4 is a cow and the stomach 16 is the reticulum of the cow.

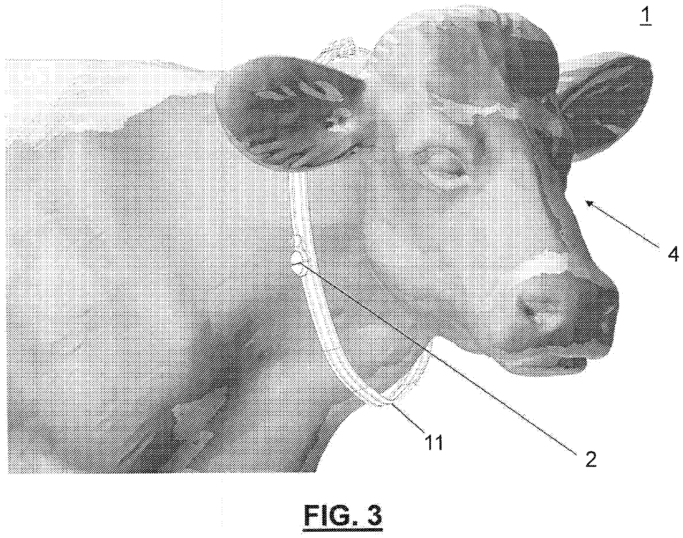

Figure 3 shows the tag 2 attached to the chosen type of carrier 11 according to Figure 2. In this example too, the chosen type of carrier 11 is a collar.

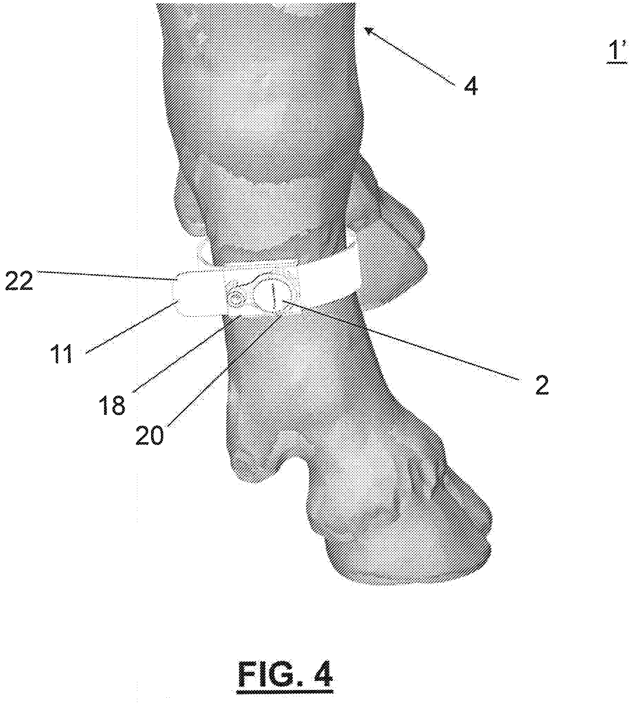

Figure 4 shows schematically a second embodiment of the system 1' according to the invention. In Figure 4 and Figure 3, mutually corresponding parts are provided with the same reference numeral. Hereinafter, only the differences of the system 1' with respect to the system 1 will be discussed. The tag 2 is attached to the chosen type of carrier 11. In this example, however, the chosen type of carrier 11 is a leg band, but this may also be a different type of carrier from the group 12 of different types of carriers. The chosen type of carrier 11 can have a buckle 18, for example for length adjustment of a band portion 22 of the chosen type of carrier 11. Other bands, such as tail bands and collars, can also have such a buckle. Optionally, the chosen type of carrier 11 can comprise a setup profile 20, as on the buckle 18, which is shaped such that the tag 2 can only be attached in a single orientation to the chosen type of carrier 11. Optionally, this single orientation is different for each different carrier in the group 12, so that on the basis of, for example, the orientation of the tag 2, in use, the use, that is, the application of the tag, can be determined. The orientation can then be determined, for example with the at least first sensor 6.1, if it is implemented, for example, as a 3G sensor. The processor 8 then determines the application of the tag on the basis of the measured orientation. Possibly, the profile 20 forms a snap connection with the tag 2. Possibly, this profile 20 could be configured to cooperate with the second sensor 6.2 for determining the application.

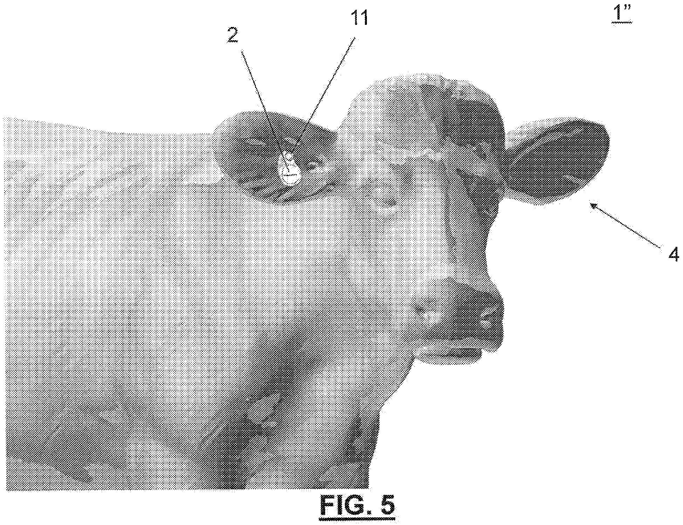

Figure 5 shows schematically a third embodiment of the system 1" according to the invention. In Figure 5 and Figure 3 corresponding parts are indicated with the same reference numeral. Hereinafter, only the differences of the system 1" with respect to the system 1 will be discussed. The tag 2 is attached directly to an ear of the animal 4. In this example, the chosen type of carrier 11 is an ear carrier. The ear carrier can comprise a pin having, for example, a broad base. The pin then extends through an ear of the animal 4 and also through an opening in the tag's own housing 15. The chosen type of carrier 11 might also be configured such that it can be attached to the ear separately from the tag, but this is not requisite.

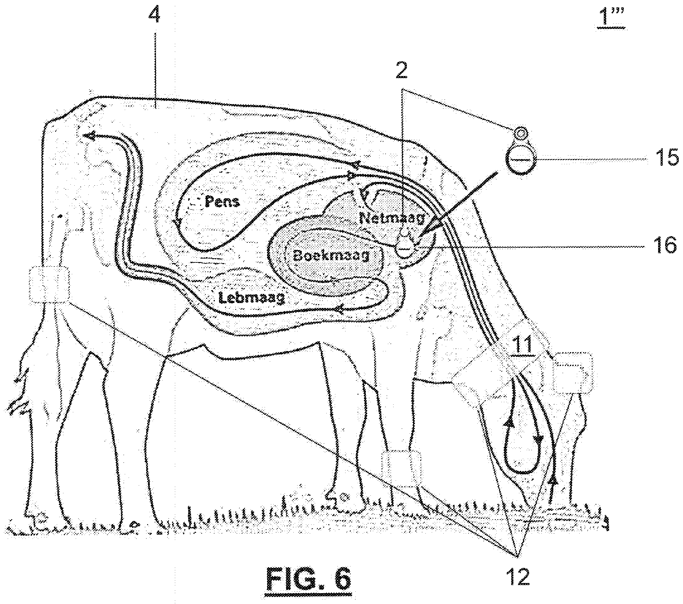

Figure 6 shows schematically a fourth embodiment of the system 1‴ according to the invention. In Figure 6 and Figure 3, mutually corresponding parts are provided with the same reference numeral. Hereinafter, only the differences of the system 1‴ with respect to the system 1 will be discussed. Not attached to any type of carrier, the tag 2 has been introduced into the stomach 16 of the animal 14. The tag's own housing 15 is implemented such that the tag 2 can be used as a bolus. The tag 2 is implemented such that after having been taken out of the stomach 16 of the animal 4 again, it could be attached to a chosen type of carrier 11. In this example, the carrier 11 is a collar. However, such a type of carrier 11 could also, at will, be a type of carrier from the group 12 of at least two, three, or four different types of carriers. A few of these options are represented in dots in Figure 6. For each of the above-mentioned types of carriers, it holds that it can comprise the code for selecting the manner in which the measuring results are to be processed, in particular for selecting an algorithm for this from a plurality of algorithms, as has been discussed above. As an alternative, it is possible that the tag on the basis of measuring results determines its application and hence the manner in which the measuring results are to be processed as has been discussed above.

## Claims

1. An animal management tag (2) configured to be worn by an animal (4), wherein the tag (2) is provided with at least one first sensor (6.1) for performing a measurement on the animal (4), a processor (8) connected with the at least one first sensor (6.1) at least for processing measuring results which have been obtained with the aid of the at least one first sensor (6.1) and a transmitting device connected with the processor (8) for transmitting information generated by the processor (8), **characterized in that** the processor (8) is configured to process the measuring results, wherein the tag (2) is implemented such that the manner of processing of the measuring results by the processor (8) is selectably implemented depending on a part of the animal to which the tag, in use, is applied.

2. The animal management tag according to claim 1, **characterized in that** the tag (2) is configured such that, in use, the manner of processing of the measuring results is determined by the use of an algorithm which is associated with a predetermined application of the tag (2) and which processes the measuring results which have been obtained with the at least one sensor (6.1), wherein the processor (8) is configured to execute the algorithm for the processing of measuring results which have been obtained with the at least one sensor (6.1), wherein the tag is configured to, preferably automatically, select the algorithm which is used for the processing of the measuring results from a plurality of mutually different algorithms which are each associated with a predetermined application of the tag, wherein in particular the tag (2) is configured such that: the selection of the algorithm to be used is, preferably automatically, carried out by the processor (8) on the basis of the measuring results obtained with the at least one first sensor (6.1); the selection of the algorithm to be used can be inputted at an input element of the tag; and/or the selection of the algorithm to be used is, preferably automatically, determined by the processor (8) on the basis of measuring results obtained with at least a second sensor (6.2) of the tag.

3. The animal management tag (2) according to claim 1 or 2, **characterized in that** the tag (2) is configured to process the measuring results with the processor (8) depending on a selection of an application from a group of applications, the group of applications comprising a plurality of different applications.

4. The animal management tag (2) according to claim 3, **characterized in that** the group of applications comprises at least two different applications, wherein each of the at least two different applications is one of an application as ear stud, leg tag, neck tag, tail tag and bolus.

5. The animal management tag (2) according to at least claim 4, **characterized in that** the group of applications comprises at least three different applications, wherein each of the at least three different applications is one of an application as ear stud, leg tag, neck tag, tail tag and bolus.

6. The animal management tag (2) according to at least claim 5, **characterized in that** the group of applications comprises at least four different applications, wherein each of the at least four different applications is one of an application as ear stud, leg tag, neck tag, tail tag and bolus.

7. The animal management tag (2) according to at least one of claims 3-6, **characterized in that** the group of applications comprises an application as ear stud, leg tag, neck tag, tail tag and bolus.

8. The animal management tag according to any one of the preceding claims, **characterized in that** the tag (2) is configured to be mechanically connected with a carrier (11), such as a band or housing.

9. The animal management tag according to claim 8, **characterized in that** the tag (2) is configured to be mechanically connected as desired with a type of carrier (11) from a group of carriers, wherein the group of carriers comprises a plurality of different carriers.

10. The animal management tag (2) according to claim 9, **characterized in that** the group of carriers comprises at least two different types of carriers (11), wherein each of the at least two different types of carriers is one of an ear carrier, leg band, collar, tail band and bolus housing.

11. The animal management tag (2) according to claim 9 or 10 and according to claim 2, **characterized in that** the second sensor is configured to:
detect which type of carrier (11) the tag (2) is connected with, while the tag(2) is configured, on the basis of the type of carrier (11), to select in what manner the measuring results are to be processed and/or which algorithms of claim 2 are to be applied;
detect a code of the carrier (11) with which the tag (2) is connected, wherein the code indicates in what manner the measuring results are to be processed by the processor (8) and/or which algorithm of claim 2 is to be used by the processor (8) for the processing of the measuring results.

12. The animal management tag (2) according to claim 11, **characterized in that** the second sensor comprises at least a switch, magnetic sensor, RFID reader, NFC reader and/or light sensor for recognizing the type of carrier (11) and/or the code with the second sensor.

13. The animal management tag (2) according to at least one of the preceding claims, **characterized in that** the at least one first sensor (6.1) is a movement and/or direction sensor.

14. The animal management tag according to at least claim 2, **characterized in that** the tag (2) is configured to process the measuring results with the processor (8) by selecting an algorithm from a group of algorithms wherein the selected algorithm is thereupon executed by the processor (8) for processing the measuring results, wherein the group of algorithms comprises a plurality of different algorithms.

15. The animal management tag according to claim 14, **characterized in that** the group of algorithms comprises at least two different algorithms, wherein each of the at least two different algorithms is configured to be executed by the processor (8) in relation to an application of the tag (2) as ear stud, leg tag, neck tag, tail tag or bolus.

16. The animal management tag (2) according to at least claim 15, **characterized in that** the group of algorithms comprises at least three different algorithms, wherein each of the at least three different algorithms is designed to be executed by the processor (8) in relation to an application of the tag (2) as an ear stud, leg tag, neck tag, tail tag or bolus.

17. The animal management tag (2) according to at least claim 16, **characterized in that** the group of applications comprises at least four different algorithms, wherein each of the at least four different algorithms is designed to be executed by the processor (8) in relation to an application of the tag (2) as an ear stud, leg tag, neck tag, tail tag or bolus.

18. The animal management tag according to at least one of claims 14-17, **characterized in that** the group of applications comprises an application as ear stud, leg tag, neck tag, tail tag and bolus.

19. The animal management tag (2) according to at least one of the preceding claims, **characterized in that** the at least one first sensor (6.1) is a 3G sensor.

20. The animal management tag according to any one of the preceding claims, **characterized in that** the tag (2) is further provided with an energy source such as a lithium battery for supplying the electrical components of the tag such as the processor (8), the transmitting device, the at least one first sensor (6.1) and/or the at least one second sensor of claim 2 with electrical energy for the operation of the electrical components.

21. A system comprising an animal management tag (2) according to at least one of claims 8-12 and at least one carrier according to at least one of claims 8-11.

## Patentansprüche

1. Etikett für Tiermanagement (2), dazu konfiguriert, von einem Tier (4) getragen zu werden, wobei das Etikett (2) mit mindestens einem ersten Sensor (6.1) zum Durchführen einer Messung an dem Tier (4) versehen ist, wobei ein Prozessor (8) mit dem mindestens einen ersten Sensor (6.1) verbunden ist, mindestens zum Verarbeiten von Messergebnissen, die mithilfe des mindestens einen ersten Sensors (6.1) erhalten wurden, und wobei eine Sendeeinrichtung mit dem Prozessor (8) verbundenen ist, zum Übertragen von durch den Prozessor (8) erzeugten Informationen, **dadurch gekennzeichnet, dass** der Prozessor (8) dazu konfiguriert ist, die Messergebnisse zu verarbeiten, wobei das Etikett (2) so implementiert ist, dass die Art des Verarbeitens der Messergebnisse durch den Prozessor (8) in Abhängigkeit von einem Teil des Tieres, auf welches das Etikett im Gebrauch angewendet wird, wählbar implementiert wird.

2. Etikett für Tiermanagement nach Anspruch 1, **dadurch gekennzeichnet, dass** das Etikett (2) so konfiguriert ist, dass im Gebrauch die Art des Verarbeitens der Messergebnisse durch die Verwendung eines Algorithmus bestimmt wird, der einer vorbestimmten Anwendung des Etiketts (2) zugeordnet ist und der die Messergebnisse verarbeitet, die mit dem mindestens einen Sensor (6.1) erhalten wurden, wobei der Prozessor (8) dazu konfiguriert ist, den Algorithmus zum Verarbeiten von Messergebnissen, die mit dem mindestens einen Sensor (6.1) erhalten wurden, auszuführen, wobei das Etikett dazu konfiguriert ist, vorzugsweise automatisch den Algorithmus auszuwählen, der zum Verarbeiten der Messergebnisse aus einer Mehrzahl an sich voneinander unterscheidender Algorithmen, die jeweils einer vorbestimmten Anwendung des Etiketts zugeordnet sind, verwendet wird, wobei insbesondere das Etikett (2) dazu konfiguriert ist, dass: die Auswahl des zu verwendenden Algorithmus durch den Prozessor (8) vorzugsweise automatisch auf der Grundlage der mit dem mindestens einen ersten Sensor (6.1) erhaltenen Messergebnisse erfolgt; die Auswahl des zu verwendenden Algorithmus an einem Eingabeelement des Etiketts eingegeben werden kann; und/oder die Auswahl des zu verwendenden Algorithmus vorzugsweise automatisch durch den Prozessor (8) auf der Grundlage der mit mindestens einem zweiten Sensor (6.2) des Etiketts erhaltenen Messergebnisse festgelegt wird.

3. Etikett für Tiermanagement (2) nach Anspruch 1 oder 2, **dadurch gekennzeichnet, dass** das Etikett (2) dazu konfiguriert ist, die Messergebnisse mit dem Prozessor (8) in Abhängigkeit von einer Auswahl einer Anwendung einer Gruppe von Anwendungen zu verarbeiten, die Gruppe von Anwendungen, umfassend eine Mehrzahl an verschiedenen Anwendungen.

4. Etikett für Tiermanagement (2) nach Anspruch 3, **dadurch gekennzeichnet, dass** die Gruppe von Anwendungen mindestens zwei verschiedene Anwendungen umfasst, wobei jede der mindestens zwei verschiedenen Anwendungen eine von einer Anwendung als Ohrstecker, Beinanhänger, Halsanhänger, Schwanzanhänger und Bolus ist.

5. Etikett für Tiermanagement (2) nach mindestens Anspruch 4, **dadurch gekennzeichnet, dass** die Gruppe von Anwendungen mindestens drei verschiedene Anwendungen umfasst, wobei jede der mindestens drei verschiedenen Anwendungen eine von einer Anwendung als Ohrstecker, Beinanhänger, Halsanhänger, Schwanzanhänger und Bolus ist.

6. Etikett für Tiermanagement (2) nach mindestens Anspruch 5, **dadurch gekennzeichnet, dass** die Gruppe von Anwendungen mindestens vier verschiedene Anwendungen umfasst, wobei jede der mindestens vier verschiedenen Anwendungen eine von einer Anwendung als Ohrstecker, Beinanhänger, Halsanhänger, Schwanzanhänger und Bolus ist.

7. Etikett für Tiermanagement (2) nach mindestens einem der Ansprüche 3-6, **dadurch gekennzeichnet, dass** die Gruppe von Anwendungen eine Anwendung wie Ohrstecker, Beinanhänger, Halsanhänger, Schwanzanhänger und Bolus umfasst.

8. Etikett für Tiermanagement nach einem der vorhergehenden Ansprüche, **dadurch gekennzeichnet, dass** das Etikett (2) dazu konfiguriert ist, mechanisch mit einem Träger (11), beispielsweise einem Band oder Gehäuse, verbunden zu sein.

9. Etikett für Tiermanagement nach Anspruch 8, **dadurch gekennzeichnet, dass** das Etikett (2) dazu konfiguriert ist, wunschgemäß mechanisch mit einem Typ von Trägern (11) aus einer Gruppe von Trägern verbunden zu sein, wobei die Gruppe von Trägern eine Mehrzahl an verschiedenen Trägern umfasst.

10. Etikett für Tiermanagement (2) nach Anspruch 9, **dadurch gekennzeichnet, dass** die Gruppe von Trägern mindestens zwei verschiedene Typen von Trägern (11) umfasst, wobei jeder der mindestens zwei verschiedenen Typen von Trägern einer von einem Ohrträger, Beinband, Halsband, Schwanzband und Bolus ist.

11. Etikett für Tiermanagement (2) nach Anspruch 9 oder 10 und nach Anspruch 2, **dadurch gekennzeichnet, dass** der zweite Sensor dazu konfiguriert ist:
zu erkennen, mit welchem Typ von Träger (11) das Etikett (2) verbunden ist, während das Etikett (2) auf der Grundlage des Typs von Träger (11) dazu konfiguriert ist, auszuwählen, in welcher Weise die Messergebnisse zu verarbeiten sind und/oder welche Algorithmen von Anspruch 2 anzuwenden sind;
einen Code des Trägers (11), mit dem das Etikett (2) verbunden ist, zu erkennen, wobei der Code angibt, in welcher Weise die Messergebnisse vom Prozessor (8) zu verarbeiten sind und/oder welcher Algorithmus nach Anspruch 2 vom Prozessor (8) zur Verarbeitung der Messergebnisse zu verwenden ist.

12. Etikett (2) für Tiermanagement nach Anspruch 11, **dadurch gekennzeichnet, dass** der zweite Sensor mindestens einen Schalter, Magnetsensor, RFID-Leser, NFC-Leser und/oder Lichtsensor zum Erkennen des Typs von Träger (11) und/oder des Codes mit dem zweiten Sensor umfasst.

13. Etikett für Tiermanagement (2) nach mindestens einem der vorhergehenden Ansprüche, **dadurch gekennzeichnet, dass** der mindestens eine erste Sensor (6.1) ein Bewegungs- und/oder Richtungssensor ist.

14. Etikett für Tiermanagement nach mindestens Anspruch 2, **dadurch gekennzeichnet, dass** das Etikett (2) dazu konfiguriert ist, die Messergebnisse mit dem Prozessor (8) zu verarbeiten, indem es einen Algorithmus aus einer Gruppe von Algorithmen auswählt, wobei der ausgewählte Algorithmus daraufhin von dem Prozessor (8) zum Verarbeiten der Messergebnisse ausgeführt wird, wobei die Gruppe von Algorithmen eine Mehrzahl an verschiedenen Algorithmen umfasst.

15. Etikett für Tiermanagement nach Anspruch 14, **dadurch gekennzeichnet, dass** die Gruppe von Algorithmen mindestens zwei verschiedene Algorithmen umfasst, wobei jeder von den mindestens zwei verschiedenen Algorithmen dazu konfiguriert ist, von dem Prozessor (8) in Relation zu einer Anwendung des Etiketts (2) als Ohrstecker, Beinanhänger, Halsanhänger, Schwanzanhänger und Bolus ausgeführt zu werden.

16. Etikett für Tiermanagement (2) nach mindestens Anspruch 15, **dadurch gekennzeichnet, dass** die Gruppe von Algorithmen mindestens drei verschiedene Algorithmen umfasst, wobei jeder von den mindestens drei verschiedenen Algorithmen dazu vorgesehen ist, von dem Prozessor (8) in Relation zu einer Anwendung des Etiketts (2) als ein Ohrstecker, Beinanhänger, Halsanhänger, Schwanzanhänger und Bolus ausgeführt zu werden.

17. Etikett für Tiermanagement (2) nach mindestens Anspruch 16, **dadurch gekennzeichnet, dass** die Gruppe von Anwendungen mindestens vier verschiedene Algorithmen umfasst, wobei jeder von den mindestens vier verschiedenen Algorithmen dazu konfiguriert ist, von dem Prozessor (8) in Relation zu einer Anwendung des Etiketts (2) als Ohrstecker, Beinanhänger, Halsanhänger, Schwanzanhänger und Bolus ausgeführt zu sein.

18. Etikett für Tiermanagement nach mindestens einem der Ansprüche 14-17, **dadurch gekennzeichnet, dass** die Gruppe von Anwendungen eine Anwendung wie Ohrstecker, Beinanhänger, Halsanhänger, Schwanzanhänger und Bolus umfasst.

19. Etikett für Tiermanagement (2) nach mindestens einem der vorhergehenden Ansprüche, **dadurch gekennzeichnet, dass** der mindestens eine erste Sensor (6.1) ein 3G-Sensor ist.

20. Etikett für Tiermanagement nach einem der vorhergehenden Ansprüche, **dadurch gekennzeichnet, dass** das Etikett (2) ferner mit einer Energiequelle wie einer Lithiumbatterie zur Versorgung der elektrischen Komponenten des Etiketts wie des Prozessors (8), der Sendeeinrichtung, des mindestens einen ersten Sensors (6.1) und/oder des mindestens einen zweiten Sensor nach Anspruch 2 mit elektrischer Energie zum Betrieb der elektrischen Komponenten versehen ist.

21. System, umfassend ein Etikett für Tiermanagement (2) nach mindestens einem der Ansprüche 8-12 und mindestens einen Träger nach mindestens einem der Ansprüche 8-11.

## Revendications

1. Étiquette de gestion d'animal (2) configurée pour être portée par un animal (4), dans laquelle l'étiquette (2) est dotée d'au moins un premier capteur (6.1) pour réaliser une mesure sur l'animal (4), d'un processeur (8) connecté à l'au moins un premier capteur (6.1) au moins pour traiter des résultats de mesure qui ont été obtenus à l'aide de l'au moins un premier capteur (6.1) et d'un dispositif de transmission connecté au processeur (8) pour transmettre des informations générées par le processeur (8), **caractérisée en ce que** le processeur (8) est configuré pour traiter les résultats de mesure, dans laquelle l'étiquette (2) est mise en oeuvre de sorte que le mode de traitement des résultats de mesure par le processeur (8) soit mis en oeuvre de manière sélective en fonction d'une partie de l'animal sur laquelle l'étiquette, lors de l'utilisation, est appliquée.

2. Étiquette de gestion d'animal selon la revendication 1, **caractérisée en ce que** l'étiquette (2) est configurée de sorte que, lors de l'utilisation, le mode de traitement des résultats de mesure soit déterminé par l'utilisation d'un algorithme qui est associé à une application prédéterminée de l'étiquette (2) et qui traite les résultats de mesure qui ont été obtenus avec l'au moins un capteur (6.1), dans laquelle le processeur (8) est configuré pour exécuté l'algorithme pour le traitement de résultats de mesure qui ont été obtenus avec l'au moins un capteur (6.1), dans laquelle l'étiquette est configurée pour, de préférence automatiquement, sélectionner l'algorithme qui est utilisé pour le traitement des résultats de mesure parmi une pluralité d'algorithmes mutuellement différents qui sont chacun associés à une application prédéterminée de l'étiquette, dans laquelle l'étiquette (2) est configurée de sorte que :
la sélection de l'algorithme à utiliser soit, de préférence automatiquement, effectuée par le processeur (8) sur la base des résultats de mesure obtenus à l'aide de l'au moins un premier capteur (6.1) ; la sélection de l'algorithme à utiliser puisse être entrée en tant qu'élément d'entrée de l'étiquette ; et/ou
la sélection de l'algorithme à utiliser soit, de préférence automatiquement, déterminée par le processeur (8) sur la base de résultats de mesure obtenus avec au moins un deuxième capteur (6.2) de l'étiquette.

3. Étiquette de gestion d'animal (2) selon la revendication 1 ou 2, **caractérisée en ce que** l'étiquette (2) est configurée pour traiter les résultats de mesure avec le processeur (8) en fonction d'une sélection d'une application parmi un groupe d'applications, le groupe d'applications comprenant une pluralité d'applications différentes.

4. Étiquette de gestion d'animal (2) selon la revendication 3, **caractérisée en ce que** le groupe d'applications comprend au moins deux applications différentes, dans laquelle chacune des au moins deux applications différentes est l'une d'une application en tant que clou d'oreille, étiquette de patte, étiquette de cou, étiquette de queue et bolus.

5. Étiquette de gestion d'animal (2) selon au moins la revendication 4, **caractérisée en ce que** le groupe d'applications comprend au moins trois applications différentes, dans laquelle chacune des au moins trois applications différentes est l'une d'une application en tant que clou d'oreille, étiquette de patte, étiquette de cou, étiquette de queue et bolus.

6. Étiquette de gestion d'animal (2) selon au moins la revendication 5, **caractérisée en ce que** le groupe d'applications comprend au moins quatre applications différentes, dans laquelle chacune des au moins quatre applications différentes est l'une d'une application en tant que clou d'oreille, étiquette de patte, étiquette de cou, étiquette de queue et bolus.

7. Étiquette de gestion d'animal (2) selon au moins l'une des revendications 3 à 6, **caractérisée en ce que** le groupe d'applications comprend une application en tant que clou d'oreille, étiquette de patte, étiquette de cou, étiquette de queue et bolus.

8. Étiquette de gestion d'animal selon l'une quelconque des revendications précédentes, **caractérisée en ce que** l'étiquette (2) est configurée pour être reliée mécaniquement à un support (11), tel qu'une bande ou un boîtier.

9. Étiquette de gestion d'animal selon la revendication 8, **caractérisée en ce que** l'étiquette (2) est configurée pour être reliée mécaniquement, à souhait, à un type de support (11) parmi un groupe de supports, dans laquelle le groupe de supports comprend une pluralité de supports différents.

10. Étiquette de gestion d'animal (2) selon la revendication 9, **caractérisée en ce que** le groupe de supports comprend au moins deux types différents de supports (11), dans laquelle chacun des au moins deux types différents de supports est l'un d'un support pour oreille, d'une bande de patte, d'un collier, d'une bande de queue et d'un boîtier de bolus.

11. Étiquette de gestion d'animal (2) selon la revendication 9 ou 10 et selon la revendication 2, **caractérisée en ce que** le deuxième capteur est configuré pour :
détecter à quel type de support (11) l'étiquette (2) est reliée, tandis que l'étiquette (2) est configurée, sur la base du type de support (11), pour sélectionner de quelle manière les résultats de mesure doivent être traités et/ou quels algorithmes selon la revendication 2 doivent être appliqués ;
détecter un code du support (11) auquel l'étiquette (2) est reliée, dans laquelle le code indique de quelle manière les résultats de mesure doivent être traités par le processeur (8) et/ou quel algorithme selon la revendication 2 doit être utilisé par le processeur (8) pour le traitement des résultats de mesure.

12. Étiquette de gestion d'animal (2) selon la revendication 11, **caractérisée en ce que** le deuxième capteur comprend au moins un commutateur, un capteur magnétique, un lecteur RFID, un lecteur NFC et/ou un capteur de lumière pour reconnaître le type de support (11) et/ou le code avec le deuxième capteur.

13. Étiquette de gestion d'animal (2) selon au moins l'une des revendications précédentes, **caractérisée en ce que** l'au moins un premier capteur (6.1) est un capteur de mouvement et/ou de direction.

14. Étiquette de gestion d'animal selon au moins la revendication 2, **caractérisée en ce que** l'étiquette (2) est configurée pour traiter les résultats de mesure avec le processeur (8) en sélectionnant un algorithme parmi un groupe d'algorithmes dans laquelle l'algorithme sélectionné est ensuite exécuté par le processeur (8) pour traiter les résultats de mesure, dans laquelle le groupe d'algorithmes comprend une pluralité d'algorithmes différents.

15. Étiquette de gestion d'animal selon la revendication 14, **caractérisée en ce que** le groupe d'algorithmes comprend au moins deux algorithmes différents, dans laquelle chacun des au moins deux algorithmes différents est configuré pour être exécuté par le processeur (8) par rapport à une application de l'étiquette (2) en tant que clou d'oreille, étiquette de patte, étiquette de cou, étiquette de queue ou bolus.

16. Étiquette de gestion d'animal (2) selon au moins la revendication 15, **caractérisée en ce que** le groupe d'algorithmes comprend au moins trois algorithmes différents, dans laquelle chacun des au moins trois algorithmes différents est conçu pour être exécuté par le processeur (8) par rapport à une application de l'étiquette (2) en tant que clou d'oreille, étiquette de patte, étiquette de cou, étiquette de queue ou bolus.

17. Étiquette de gestion d'animal (2) selon au moins la revendication 16, **caractérisée en ce que** le groupe d'applications comprend au moins quatre algorithmes différents, dans laquelle chacun des au moins quatre algorithmes différents est conçu pour être exécuté par le processeur (8) par rapport à une application de l'étiquette (2) en tant que clou d'oreille, étiquette de patte, étiquette de cou, étiquette de queue ou bolus.

18. Étiquette de gestion d'animal selon au moins l'une des revendications 14 à 17, **caractérisée en ce que** le groupe d'applications comprend une application en tant que clou d'oreille, étiquette de patte, étiquette de cou, étiquette de queue et bolus.

19. Étiquette de gestion d'animal (2) selon au moins l'une des revendications précédentes, **caractérisée en ce que** l'au moins un premier capteur (6.1) est un capteur 3G.

20. Étiquette de gestion d'animal selon l'une quelconque des revendications précédentes, **caractérisée en ce que** l'étiquette (2) est en outre dotée d'une source d'énergie telle qu'une batterie au lithium pour fournir aux composants électriques de l'étiquette, tels que le processeur (8), le dispositif de transmission, l'au moins un premier capteur (6.1) et/ou l'au moins un deuxième capteur selon la revendication 2, une énergie électrique pour le fonctionnement des composants électriques.

21. Système comprenant une étiquette de gestion d'animal (2) selon au moins l'une des revendications 8 à 12 et au moins un support selon au moins l'une des revendications 8 à 11.
